# EUROPEAN PATENT APPLICATION

(11) **EP 0 891 033 A1**
(43) Date of publication of application: **13.01.1999**
(21) Application number: 98302246.8
(22) Date of filing: 25.03.1998
(51) Int. Cl.: H02K 41/035

(54) **Deformable shaft**

(30) Priority: 08.07.1997 US 889393
(71) Applicant: SYSTEMS, MACHINES, AUTOMATION COMPONENTS CORPORATION, Carlsbad, California 92008 (US)
(72) Inventor: Portegies, Hans, Temecula, California 92592 (US); Neff, Edward A., Rancho Santa Fe, California 92067 (US); Simunovic, Tomas T., Vista, California 92083 (US)
(74) Representative: Thomas, Philip John Duval

(57) **Abstract**

A shaft (10) engageable with the reciprocative component of a voice coil actuator (14) for selective translational projection of the shaft from the actuator includes a proximal section (30), an intermediate section, and a distal section (26). The proximal section is engageable with the reciprocative component of the actuator. A proximal connector (40), defined by a groove (38) in the shaft between the proximal section and the intermediate section, is deformable in response to a force applied against the shaft distal to the proximal connector to substantially isolate the reciprocative component of the actuator from the force. Likewise, a distal connector defined by a groove in the shaft between the intermediate section and the distal section is similarly deformable in response to a force applied against the shaft distal to the distal connector, to substantially isolate the reciprocative component of the actuator from the force. Additionally, the shaft includes a lumen that extends from a proximal end to a distal end of the shaft. A vacuum source can be connected in fluid communication with the lumen for selectively creating a partial vacuum at the distal end of the shaft for holding components during the automated assembly of a product.

## Description

### FIELD OF THE INVENTION

The present invention pertains generally to machines which are useful for the automated assembly of products. More specifically, the present invention pertains to devices which are useful for moving and positioning component parts during the automated assembly of products. The present invention is particularly, but not exclusively, useful as a shaft which is attachable to the reciprocative component of a voice coil actuator and which has deformable portions that protect the reciprocative component although the shaft itself may be damaged.

### BACKGROUND OF THE INVENTION

Numerous devices that are useful for the automated manufacture and assembly of products have been used successfully for many years. In each instance, these devices have been employed with a view towards increasing the efficiencies and accuracies of the procedures followed during the manufacture and assembly of a completed product. Indeed, the vast majority of consumer products are now produced with automated devices.

It is easy to appreciate that as the complexity of a manufactured product increases, there may also be a commensurate increase in the complexity of the machines that are required to manufacture the product. This is particularly so where the component parts have small or irregular shapes, or where precision machining or assembly is important. For example, many products, including printed circuit boards, require that small components be accurately positioned and then inserted into other components. The process of positioning becomes increasingly difficult as smaller components are used, or where the components have irregular or varying shapes.

One type of device that has been successfully utilized as part of automated assembly systems is the linear voice coil actuator. Actuators of this type include an electromagnetic coil and a fixed-pole magnet. Electric current applied to the electromagnetic coil causes the coil to generate a magnetic field. The magnetic field generated by the electromagnetic coil interacts with the magnetic field produced by the fixed-pole magnet, which causes the electromagnetic coil to move translationally with respect to the fixed-pole magnet. Typically, a rod is attached to the coil to move translationally with the moving coil. A probe, gripper, or other tool may be attached to the rod. In use, a gripper, for example, which has been attached to the rod, is advanced until positioned proximate an assembly component. The component is then gripped by the gripper, moved by the actuator, and repositioned on the product with the gripper.

When installing an automated assembly apparatus, the rod attached to the actuator or the actuator itself can sometimes become damaged. The rod or the actuator can also become damaged during use of the automated assembly apparatus. For example, if the rod is inadvertently hit by the operator of the automated assembly apparatus, the coil can be moved out of alignment, preventing movement of the coil. Practice has indicated that the main cause of actuator failure is bent rods. Repairing this inadvertent damage commonly constitutes a difficult, costly repair requiring a significant amount of time.

In light of the above, it is an object of the present invention to provide a shaft that attaches to the reciprocative component of a voice coil actuator, which is easily replaced if damaged. Another object of the present invention is to provide a shaft that attaches to the reciprocative component of a voice coil actuator, which is deformable when a force is applied to the shaft, to prevent the reciprocative component of the voice coil actuator from being damaged, and which is easily replaced when damaged. Another object of the present invention is to provide a shaft that attaches to the reciprocative component of a voice coil actuator, which is easily replaced if damaged, and which is easy to manufacture, simple to use, and comparatively cost effective.

### SUMMARY OF THE PREFERRED EMBODIMENTS

A shaft engageable with the reciprocative component of a voice coil actuator is specifically engineered to be predictably deformable when subjected to a side force. The purpose of these engineered weak points in the shaft is to absorb the impact of the side force and to thereby protect the actuator from damage. Further, once the shaft has been damaged and deformed by the side force, the shaft can be replaced without the need for repair or replacement of the reciprocative component of the voice coil actuator. As contemplated for the present invention, the shaft is generally cylindrically shaped and includes a proximal section, an intermediate section, and a distal section which are each interconnected with deformable connectors.

A deformable proximal connector connects the proximal section with the intermediate section, and a deformable distal connector connects the intermediate section with the distal section. Specifically, an annular groove in the shaft between the proximal section and the intermediate section defines the proximal connector. The proximal connector is deformable in response to a force applied against the shaft distal to the proximal connector. The proximal connector is made deformable in order to substantially isolate the actuator from the force and to thereby prevent damage to the actuator.

Similarly, an annular groove in the shaft between the intermediate section and the distal section defines the distal connector. The distal connector is deformable in response to a force applied against the shaft distal to the distal connector. Like the proximal connector, the distal connector is made deformable in order to substantially isolate the actuator from the force to prevent damage to the actuator.

The shaft is engaged with the reciprocative component of the actuator for selective translational projection of the shaft from the actuator. The reciprocative component of the actuator is typically a rod attached to a movable electrical coil of the actuator. Threads are provided on the proximal section of the shaft for selectively engaging the proximal section of the shaft with the rod. Alternately, the proximal section of the shaft can include a recess that is selectively engageable around the end of the rod. Both the threads and the recess facilitate easy replacement of the shaft if the shaft becomes damaged.

Additionally, the shaft has a proximal end and a distal end, and a lumen that extends from the proximal end to the distal end. The end of the lumen at the proximal end of the shaft interfaces with a corresponding lumen in the rod of the actuator. A vacuum source can be connected to the lumen in the rod, for selectively creating a partial vacuum at the distal end of the shaft. The partial vacuum at the distal end of the shaft can be used to hold components against the distal end of the shaft. The components can thereby be moved during the automated assembly of a product.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1A is a perspective view of the shaft of the present invention, in its operative environment, with the shaft in an extended configuration;
Figure 1B is the shaft of Figure 1A, with the shaft in a retracted configuration;
Figure 2 is a side plan view of a first embodiment of the shaft of the present invention;
Figure 3 is a bottom plan view of the shaft of Figure 2, viewing the proximal end of the shaft;
Figure 4 is a side plan view of a second embodiment of the shaft of the present invention; and
Figure 5 is a bottom plan view of the shaft of Figure 4, viewing the proximal end of the shaft.

### DESCRIPTION OF THE PREFERRED EMBODIMENT

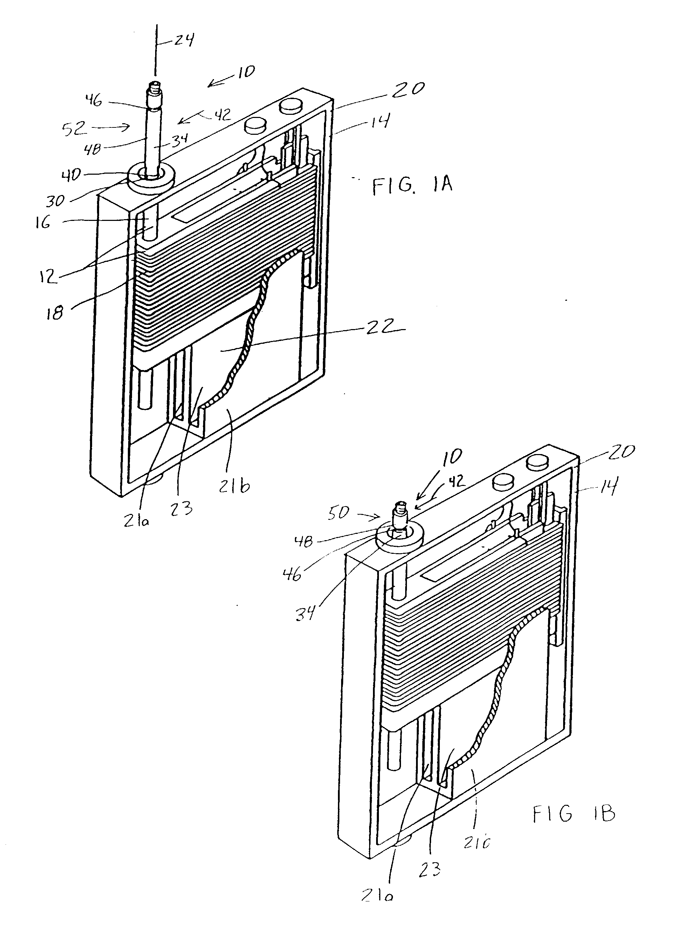

Referring initially to Figure 1A, a shaft in accordance with the present invention is shown and is generally designated 10. The shaft 10 is engaged with the reciprocative component 12 of an electric voice coil actuator 14 for movement therewith, for selective translational projection of the shaft 10 from the actuator 14. The motive force provided by the actuator 14 moves the shaft 10 between an extended configuration and a retracted configuration. In Figure 1A the shaft 10 is shown in the extended configuration. In contrast, in Figure 1B, the shaft 10 is shown in the retracted configuration. Other movements of the shaft 10, for example rotational, may also be implemented.

The combination of the shaft 10 and the actuator 14 is generally intended to be used for moving components (not shown) during the automated assembly of products. However, the shaft 10 and the actuator 14 may be used in any application requiring movement of the shaft 10, for example, for moving a sensor (not shown) attached to the shaft 10.

The reciprocative component 12 includes a rod 16 and an electric coil 18. The shaft 10 is selectively engageable with the rod 16, which is secured to the coil 18. The coil 18 is slidingly mounted on the housing 20, for linear reciprocal movement relative to the housing 20, and relative to a magnet assembly 22 which is mounted on the housing 20. Magnet assembly 22 typically includes a pair of magnets 21a and 21b which are attached to and positioned relative to ferromagnetic material 23 as shown in Figs. 1A and 1B. In order for the coil 18 t move when electric current is supplied to the coil 18, the magnets 21a and 21b and the ferromagnetic material 23 must be properly positioned relative to the coil 18. As is well known in the art, the magnets 21a and 21b and the ferromagnetic material 23 are positioned so as to orient the magnet field produced by magnet assembly 22 substantially perpendicular to the longitudinal axis of the coil 18, with substantially all of the magnetic flux directed towards the ferromagnetic material 23, or with substantially all of the magnetic flux directed away from the ferromagnetic material 23. When an electric current is supplied to the coil 18, the current in the coil 18 generates a magnetic field (not shown) which interacts with the magnetic field (not shown) produced by the magnet assembly 22. As is widely known in the art, the interaction of the magnetic fields causes the coil 18 to move. The current can be varied to control the movement of the coil 18 and the shaft 10.

Alternately, the coil 18 can be mounted on the housing 20 and the magnet assembly 22 can be slidingly mounted on the housing 20. In this alternate embodiment (not shown) of the actuator 14, the magnet assembly 22 is caused to move in response to the current in the coil 18, and the rod 16 is attached to the magnet assembly 22 for movement therewith.

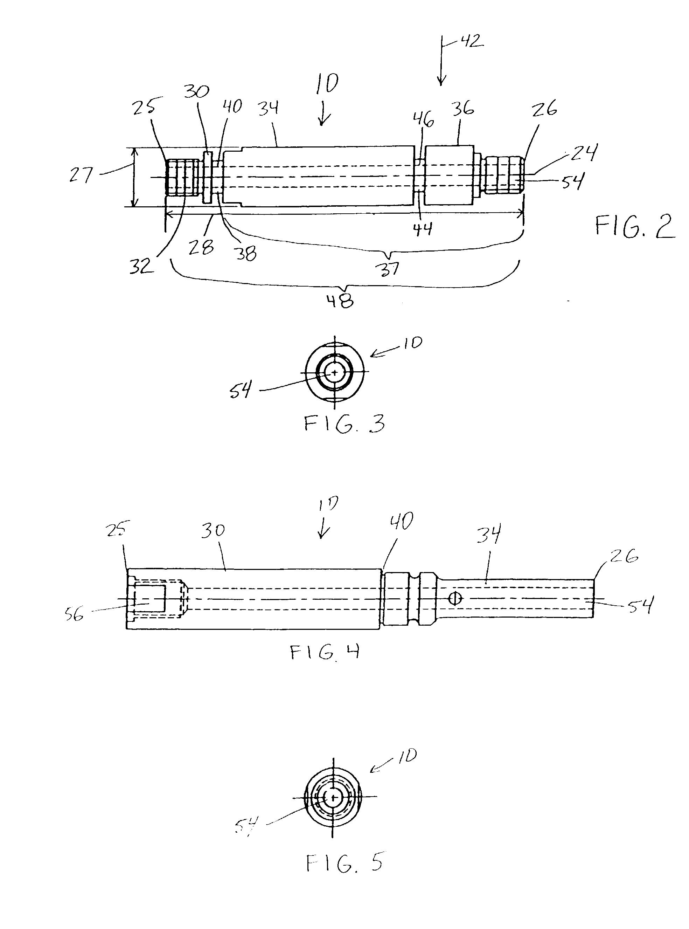

Referring to Figure 2, a first embodiment of the shaft 10 of the present invention is shown. The shaft 10, which defines a longitudinal axis 24, is substantially cylindrically shaped, and has a proximal end 25 and a distal end 26. The shaft has an outer diameter 27 and a length 28 which extends from the proximal end 25 to the distal end 26. It will be appreciated that shapes other than the cylindrical shape discussed herein can be used for the shaft 10.

A proximal section 30 of the shaft 10 is engageable with the rod 16 of the actuator 14. Specifically, in the embodiment shown in Figure 2, the proximal section 30 of the shaft 10 has threads 32 for selectively engaging the shaft 10 with corresponding threads (not shown) on the rod 16. The threads 32 permit easy removal of the shaft 10 from the rod 16 and reattachment of a replacement shaft 10 to the rod 16, which facilitates quick replacement of the shaft 10 if the shaft 10 becomes damaged. As an alternative to the threads 32, the shaft 10 may be attached to the rod 16 with any appropriate fastener, for example, snaps, dowels, crimp connectors, or screws.

As shown in Figure 2, the shaft 10 includes the proximal section 30, and a distal portion 37. The distal portion includes an intermediate section 34, and a distal section 36. A groove 38 in the shaft 10 between the proximal section 30 and the intermediate section 34 defines a proximal connector 40, which connects the proximal section 30 to the intermediate section 34 of the distal portion 37. The groove 38 is annular shaped, and circumscribes the longitudinal axis 24 of the shaft 10. However, other shapes can be used for the groove 38, for example, elliptical, rectangular, square, v-shaped, or linear. The proximal connector 40 is deformable in response to a side force 42 applied against the shaft 10 anywhere along the shaft 10 at positions distal to the proximal connector 40. The purpose of the proximal connector 40 is to absorb the impact of the side force 42 and to thereby substantially isolate the reciprocative component 12 of the actuator 14 from the side force 42. As indicated above, this protects the actuator 14 from damage. For purposes of the present invention the side force 42 can be any force with a component perpendicular to the longitudinal axis 24 of the shaft 10. Once the shaft 10 has been damaged and deformed by the side force 42, the shaft 10 can be replaced without the need for repair or replacement of the reciprocative component 12 of the voice coil actuator 14.

More than one deformable connector can be used for the present invention. For instance, a groove 44 in the distal portion 37 of the shaft 10 between the intermediate section 34 and the distal section 36 can be added to define a distal connector 46. This distal connector 46 is similar to the proximal connector 40 but different in that it connects the intermediate section 34 to the distal section 36. The groove 44 is annular shaped, and circumscribes the longitudinal axis 24 of the shaft 10. However, other shapes can be used for the groove 44, for example, elliptical, rectangular, square, v-shaped, or linear. specifically engineered to be predictably deformable when subjected to a side force. The distal connector 46 is deformable in response to a side force 42 applied against the shaft 10, to absorb the impact of the side force 42 to substantially isolate the reciprocative component 12 of the actuator 14 from the side force 42 and protect the actuator 14 from damage.

Still referring to Figure 2, the proximal section 30, intermediate section 34, distal section 36, proximal connector 40, and distal connector 46 may collectively be referred to as a body 48 of the shaft 10. When attached to the rod 16, the body 48 is movable between a retracted configuration (shown in Figure 1B), and an extended configuration (shown in Figure 1A). In the retracted configuration, the distal connector 46 is extended from the housing 20 and the proximal connector 40 remains inside the housing 20. In the extended configuration, both the distal connector 46 and the proximal connector 40 are extended from the housing 20. Consequently, at least one of the connectors 40, 46 will be extended from the housing 20 at all times. Since the connectors 40, 46 are more easily deformed when extended from the housing 20, this orientation of the connectors 40, 46 maximizes protection of the actuator 14 during the full range of movement of the shaft 10. Thus, if the body 48 is subjected to a side force 42 while in the retracted configuration, or when not fully extended, the intermediate section 34 may be pushed against the housing 20, and deformation of the distal connector 46 may result. If the body 48 is subjected to a side force 42 while in the extended configuration, the proximal section 30 may be pushed against the housing 20, and deformation of the proximal connector 40 or the distal connector 46 may result.

In both configurations, or in any intermediate position of the body 48, deformation of the connectors 40, 46 may result even if the body 48 does not contact the housing 20. Consequently, the reciprocative component 12 of the actuator 14 is substantially isolated from the side force 42, and the actuator 14 is protected from damage.

As shown in Figures 2 and 3, a lumen 54 extends through the shaft 10 from the proximal end 25 to the distal end 26 of the shaft 10. The rod 16 can also have a lumen (not shown), which connects with the lumen 54 at the proximal end of the shaft 10. A vacuum source (not shown) may be selectively connected in fluid communication with the lumen in the rod 16, to selectively create a partial vacuum at the distal end 26 of the shaft 10. The partial vacuum at the distal end of the shaft 10 can be used for holding components against the distal end 26 of the shaft 10, for moving and positioning the components during the automated assembly of products.

The shaft 10 is made of material that can be formed into the cylindrical shape discussed above, for example, plastic, aluminum, or steel. The proximal section 30 of the shaft 10 may be made of plastic, aluminum, steel, or similar material, independent of the material used for the remainder of the shaft 10.

Referring to Figures 4 and 5, an alternative embodiment of the shaft 10 is shown. In this alternative embodiment, as in the embodiment shown in Figures 2 and 3, the proximal connector 40 connects the proximal section 30 with the intermediate section 34. This alternative embodiment has the features of the embodiment shown in Figures 2 and 3, except that the distal section 36 and the distal connector 46 are not included. Also, in this alternative embodiment, the proximal section 30 of the shaft 10 is formed with a recess 56, rather than the threads 32 used in the embodiment shown in Figures 2 and 3, for selectively engaging the shaft 10 with the rod 16. The recess 56 is formed to receive the end (not shown) of the rod 16, which inserts into the recess 56. The recess 56 permits easy removal of the shaft 10 from the rod 16 and reattachment of a replacement shaft 10 to the rod 16, which facilitates quick replacement of the shaft 10 if the shaft 10 becomes damaged. The shaft 10 may be attached to the rod 16 with any appropriate fastener, for example, snaps, dowels, crimp connectors, or screws. The alternative embodiment shown in Figures 4 and 5 also includes a lumen 54 similar to the lumen 54 in the embodiment shown in Figures 2 and 3.

While the particular shaft as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A shaft engageable with the reciprocative component of a voice coil actuator for selective translational projection of the shaft from the actuator, the shaft comprising:
a proximal section selectively engageable with the reciprocative component of the actuator;
a distal portion; and
a proximal connector defined by a groove in said shaft between said proximal section and said distal portion for connecting said proximal section to said distal portion, said proximal connector being deformable in response to a force applied against said shaft distal to said proximal connector to substantially isolate the reciprocative component of the actuator from the force.

2. A shaft as recited in claim 1 wherein said distal portion further comprises:
an intermediate section;
a distal section; and
a distal connector defined by a groove in said shaft between said intermediate section and said distal section for connecting said intermediate section to said distal section, said distal connector being deformable in response to a force applied against said shaft distal to said distal connector to substantially isolate the reciprocative component of the actuator from the force.

3. A shaft as recited in claim 1 wherein said shaft is substantially cylindrical.

4. A shaft as recited in claim 1 wherein said groove is substantially annular.

5. A shaft as recited in claim 1 wherein said shaft has a proximal end and a distal end, and Wherein said shaft has a lumen extending from said proximal end to said distal end.

6. A shaft as recited in claim 1 wherein said proximal section has threads for selectively engaging said shaft with the reciprocative component of the actuator.

7. A shaft as recited in claim 1 wherein said proximal section has a recess for selectively engaging said shaft with the reciprocative component of the actuator.

8. A shaft as recited in claim 1 wherein said proximal section is made of plastic.

9. A shaft as recited in claim 1 wherein said proximal section is made of aluminum.

10. A shaft as recited in claim 1 wherein said proximal section is made of steel.

11. A shaft engageable with the reciprocative component of a voice coil actuator for selective projection of the shaft from a housing of the actuator, the shaft comprising:
a body selectively engageable with the reciprocative component of the actuator, said body defining a longitudinal axis and having a proximal connector defined by a proximal groove in said body circumscribing said longitudinal axis, and having a distal connector defined by a distal groove in said body circumscribing said longitudinal axis, said body being movable on said housing between a retracted configuration characterized by extension of said distal connector from the housing with said proximal connector remaining inside the housing, and an extended configuration characterized by extension of both said distal connector and said proximal connector from the housing, said connectors being deformable in response to a force applied against said body to substantially isolate the reciprocative component of the actuator from the force.

12. A shaft as recited in claim 11 wherein said shaft is substantially cylindrical.

13. A shaft as recited in claim 11 wherein said proximal groove and said distal groove are substantially annular.

14. A shaft as recited in claim 11 wherein said shaft has a proximal end and a distal end, and wherein said shaft has a lumen extending from said proximal end to said distal end.

15. A shaft as recited in claim 11 wherein said shaft has a proximal end and said shaft has threads adjacent said proximal end for selectively engaging said shaft with the reciprocative component of the actuator.

16. A shaft as recited in claim 11 wherein said shaft has a proximal end and said shaft has a recess adjacent said proximal end for selectively engaging said shaft with the reciprocative component of the actuator.

17. A method for manufacturing a shaft engageable with the reciprocative component of a voice coil actuator for selective projection of the shaft from the actuator, the method comprising the steps of:
providing a body having a proximal section and a distal portion, said proximal section being selectively engageable with the reciprocative component of the voice coil actuator; and
forming a proximal groove in said body between said proximal section and said distal portion, said proximal groove defining a proximal connector in said body, said proximal connector connecting said proximal section and said distal portion of said body, said proximal connector being deformable in response to a force applied against said body to substantially isolate the reciprocative component of the actuator from the force.

18. A method as recited in claim 17 wherein said distal portion further comprises an intermediate section and a distal section, and further comprising the step of forming a distal groove in said body between said intermediate section and said distal section, said distal groove defining a distal connector in said body, said distal connector connecting said intermediate section and said distal section of said body, said distal connector being deformable in response to a force applied against said body to substantially isolate the reciprocative component of the actuator from the force.

19. A method as recited in claim 17 wherein said shaft has a proximal end and a distal end, and wherein said shaft has a lumen extending from said proximal end to said distal end.

20. A method as recited in claim 17 wherein said shaft is substantially cylindrical, and said proximal groove and said distal groove are substantially annular.
